# EUROPEAN PATENT APPLICATION

(11) **EP 1 067 741 A1**
(43) Date of publication of application: **10.01.2001**
(21) Application number: 99401888.5
(22) Date of filing: 23.07.1999
(51) Int. Cl.: H04L 12/58

(54) **Method and apparatus for use with E-mail**

(30) Priority: 05.07.1999 EP 99401680
(71) Applicant: CANAL+ Société Anonyme, 75711 Paris Cedex 15 (FR)
(72) Inventor: Bayassi, Mulham, 75015 Paris (FR)
(74) Representative: Cozens, Paul Dennis

(57) **Abstract**

A method of notifying a user of the receipt of an e-mail by a mail centre is described, the method comprising transmitting a notification message in a broadcast signal. Also described is a method of notifying a user of the receipt of e-mail by a mail centre, which e-mail is to be transmitted to the user via a first medium, the method comprising transmitting a notification message, indicating the receipt of e-mail by the mail centre, to the user via a second medium, different from the first medium. Corresponding apparatus, receiver/decoder and system are also described.

## Description

The invention relates to a method of and apparatus for notifying a user of e-mail services of the receipt of e-mail at a mail centre.

In prior art e-mail systems, a user at a remote location accesses his e-mail by logging on to the server of his internet service provider (ISP). The ISP has a mail centre which is responsible for sending and retrieving e-mails to and from the internet, and for storing retrieved e-mails. When the user logs on to the ISP, it informs him of whether or not he has e-mail waiting for him at the mail centre, any such e-mail is then downloaded to the subscriber.

A problem in the prior art is that the user can only tell if he has mail by logging on to the ISP. If there is no mail waiting, then this time is wasted.

According to a first aspect of the present invention there is provided a method of notifying a user of the receipt of e-mail by a mail centre comprising transmitting a notification message in a broadcast signal.

The notification message may be sent without any (direct) user prompt.

By transmitting the notification message in a broadcast signal the user may be informed of the receipt of e-mail by the mail centre, without the need for the user to log on to the mail centre.

The notification message may include an identifier of the receiver/decoder to which the notification message is to be sent. This can allow the receiver/decoder to extract only those notification messages which are destined for the user or users which use that receiver/decoder. Preferably, the receiver/decoder compares the identifier with an identifier which is stored at the receiver/decoder. For example, the receiver/decoder may have a smartcard number and the identifier may comprise at least part of the smartcard number. This can provide a convenient way for the notification message to address the relevant receiver/decoder.

As used herein, the term "smartcard" includes, but not exclusively so, any chip-based card device, or object of similar function and performance, possessing, for example, microprocessor and/or memory storage. Included in this term are devices having alternative physical forms to a card, for example key-shaped devices such as are often used in TV decoder systems.

Preferably the method further comprises storing information relating to e-mail accounts, for example, e-mail addresses, aliases, passwords, user preferences and so forth. The information is preferably stored at the operator, which may be at a central location. This can allow the operator to manage e-mail accounts.

In order to identify the receiver/decoder to which the notification message should be sent, information relating to e-mail accounts is preferably linked to identifiers of receiver/decoders. For example, notification messages may be sent to receiver/decoders having smartcard numbers and the information relating to e-mail accounts may be linked to the smartcard numbers. The smartcard number is a number unique to the smartcard of a receiver/decoder, and thus uniquely identifies the receiver/decoder.

The broadcast signal may be part of a subscription service and information relating to e-mail accounts may be linked to information relating to the subscription service. This can allow e-mail accounts to be managed together with the subscription service. As used herein, the term "subscriber" refers to a subscriber to broadcast services, while the term "user" refers to a user of e-mail services. There may be one or more e-mail users associated with each subscriber.

The notification message may contain various pieces of information which can be made available to the user, for example for display on a television screen or on the display of a set-top box. For example, the notification message may comprise an identifier of the recipient of the e-mail (since one receiver/decoder may be used for several e-mail accounts), or an identifier of the sender of the e-mail. The notification message may also comprise at least part of the text of the e-mail, for example the title or the subject of the e-mail. It should be noted that the text may be coded for transmission, and decoded by the receiver/decoder.

Preferably, a receiver/decoder generates a signal for displaying at least part of the notification message, such as an identifier of the recipient of the e-mail, an identifier of the sender of the e-mail, or part or all of the text of the e-mail. In other cases, no part of the notification message is displayed, but an icon appears on the screen. The receiver/decoder may be the subscriber's receiver/decoder and the signal may be for displaying at least part of the message, for example, on a television screen or on the display of the receiver/decoder.

The method may further comprise storing preferences selected by the user, for example, concerning whether or not the user wishes to be notified of e-mail, and the number of e-mails that he wishes to be notified of. The preferences may be stored in the receiver/decoder and in a database managed by the operator.

Preferably, the user is notified of a selected number of e-mails. For example, the user may be notified of each e-mail received by the mail centre, or the user may be notified only of the first e-mail received by the mail centre since the user last accessed the mail centre.

The invention has particular application in the broadcast of digital data, into which additional information may be readily inserted, and thus the broadcast signal is preferably a digital data stream, preferably transmitted via a digital transmission system. As used herein, the term "digital transmission system" includes any transmission system for transmitting or broadcasting for example primarily audiovisual or multimedia digital data. Whilst the present invention is particularly applicable to a broadcast digital television system, the invention may also be applicable to a fixed telecommunications network for multimedia internet applications, to a closed circuit television, and so on.

To reduce the amount of data that is transmitted, the digital data stream may be compressed using a digital compression technique, such as MPEG or other known compression techniques. The term MPEG refers to the data transmission standards developed by the International Standards Organisation working group "Motion Pictures Expert Group" and in particular but not exclusively the MPEG-2 standard developed for digital television applications and set out in the documents ISO 13818-1, ISO 13818-2, ISO 13818-3 and ISO 13818-4. In the context of the present patent application, the term includes all variants, modifications or developments of MPEG formats applicable to the field of digital data transmission.

The notification message may be sent using any known technique which allows the insertion of a message into the broadcast signal; for example the notification message may be sent as a section of the digital data stream, such as an MPEG section, or by way of an entitlement management message (EMM).

The method may further comprise providing the user with a receiver/decoder to receive and/or to decode the broadcast signal. It should be noted that two or more users may share the same receiver/decoder. The term "receiver/decoder" used herein may connote a receiver for receiving either encoded or non-encoded signals, for example, television and/or radio signals, which may be broadcast or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television.

The invention is particularly suitable for use with a television broadcast system, and thus the broadcast signal may comprise a television signal. As used herein, "television broadcast system" includes for example any satellite, terrestrial, cable or other system.

Preferably the notification message is pushed to the user, by which it is preferably meant that the user takes no specific action to enquire about whether e-mail is waiting.

According to a second aspect of the present invention there is provided a method of notifying a user of the receipt of e-mail by a mail centre, which e-mail is to be transmitted to the user via a first medium, comprising transmitting a notification message, indicating the receipt of e-mail by the mail centre, to the user via a second medium, different from the first medium.

Preferably the first medium is a switched medium and the second medium is a broadcast medium.

The second aspect may further comprise any of the features of the first aspect and *vice versa.*

The invention also provides a method of transferring an e-mail from a mail centre to a user, comprising transmitting at least part of the e-mail in a broadcast signal. In this way, the whole of the e-mail may be transferred to the user without the user specifically requesting the e-mail to be sent, that is, without any (direct) user prompt. The e-mail may be transferred to the user in any of the ways described above with respect to notification messages.

The invention also provides a method of communicating with a mail centre comprising running an e-mail, application on a receiver/decoder. This can allow a user to communicate with a mail centre without the need for a separate computer.

In an apparatus embodiment of the present invention there is provided apparatus for notifying a user of the receipt of e-mail comprising means for transmitting a notification message in a broadcast signal.

The notification message may include an identifier of a receiver/decoder to which the notification message is to be sent.

The apparatus may further comprise means for storing information relating to e-mail accounts. Information relating to e-mail accounts may be linked to identifiers of receiver/decoders. The information relating to e-mail accounts may be linked to the smartcard numbers of decoders. The broadcast signal may be part of a subscription service and information relating to e-mail accounts may be linked to information relating to the subscription service.

The notification message may comprise an identifier of the recipient of the e-mail. The notification message may comprise an identifier of the sender of the e-mail. The notification message may comprise at least part of the text of the e-mail.

The apparatus may further comprise means for storing preferences selected by the user. The apparatus may be adapted to notify the user of a selected number of e-mails. The apparatus may be adapted to notify a user of each e-mail received by the mail centre. The apparatus may be adapted to notify a user only of the first e-mail received by the mail centre since the user last accessed the mail centre.

The broadcast signal may be a digital data stream. The apparatus may further comprise means for compressing the digital data stream using a digital compression technique.

The apparatus may be adapted to send the notification message as a section of the digital data stream. The apparatus may be adapted to send the notification message by way of an entitlement management message.

The broadcast signal may comprise a television signal.

The apparatus may be adapted to push the notification message to the user.

According to another apparatus aspect, there is provided apparatus for notifying a user of the receipt of e-mail by a mail centre, which e-mail is to be transmitted to the user via a first medium, comprising means for transmitting a notification message, indicating the receipt of e-mail by the mail centre, to the user via a second medium, different from the first medium.

The first medium may be a switched medium and the second medium may be a broadcast medium.

The invention also provided apparatus for transferring an e-mail from a mail centre to a user, comprising means for transmitting at least part of the e-mail in a broadcast signal. This apparatus may comprise any of the embodiments described above with respect to notification messages.

According to another apparatus aspect, there is provided a receiver/decoder for receiving and/or decoding a broadcast signal, comprising means for receiving, together with a broadcast signal, a notification message for notifying a user of the receipt of e-mail by a mail centre.

The receiver/decoder may be adapted to compare an identifier in the notification message with an identifier which is stored at the receiver/decoder. The receiver/decoder may have a smartcard number and the identifier may comprise at least part of the smartcard number.

The receiver/decoder may generate a signal indicating the receipt of e-mail by the mail centre. The receiver/decoder may generate a signal for displaying at least part of the notification message.

According to another apparatus aspect there is provided a receiver/decoder for receiving and/or decoding a broadcast signal, comprising means for receiving e-mail via a first medium and means for receiving a notification message, indicating the receipt of e-mail by the mail centre, via a second medium different from the first medium.

The first medium may be a switched medium and the second medium may be a broadcast medium.

There may be provided a system for notifying a user of the receipt of e-mail comprising apparatus as described above and a receiver/decoder as described above.

Method features may be applied to the apparatus aspects and *vice versa.* Features of one aspect may be applied to other aspects.

Preferred features of the present invention will now be described, purely by way of example, with reference to the accompanying drawings, in which:-
Figure 1 shows the architecture of a typical digital television system,
Figure 2 is a schematic diagram of a receiver/decoder;
Figure 3 shows an overview of an internet access system;
Figure 4 illustrates software layers in the user equipment of Figure 3;
Figure 5 shows the architecture of an internet access system;
Figure 6 shows the main components of an internet account management system; and
Figure 7 shows the structure of an entitlement management message.

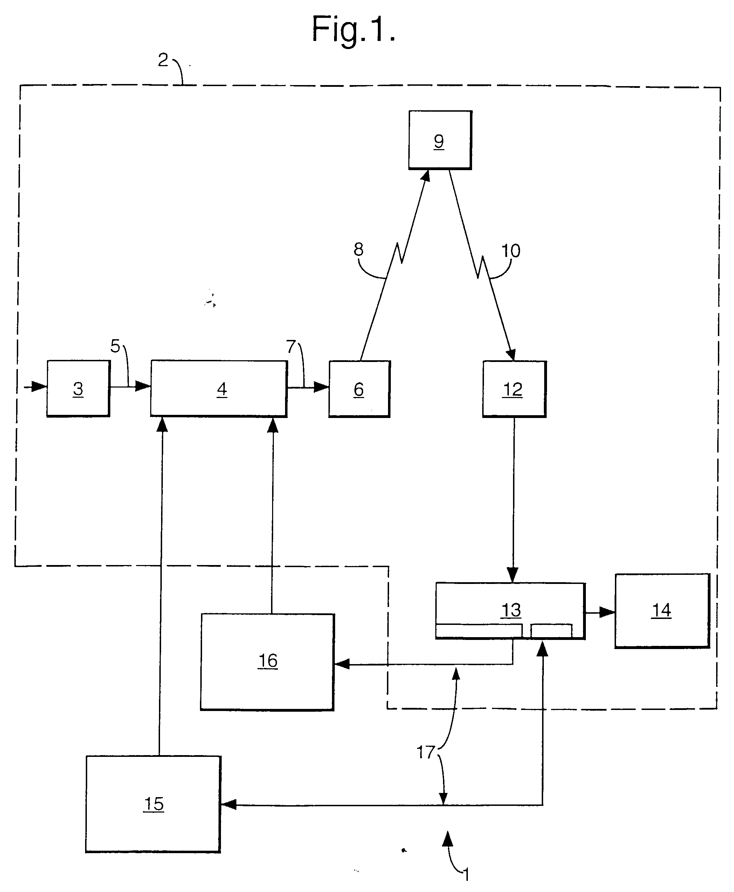

An overview of a digital television system 1 is shown in Figure 1. The invention includes a mostly conventional digital television system 2 that uses the known MPEG-2 compression system to transmit compressed digital signals. In more detail, MPEG-2 compressor 3 in a broadcast centre receives a digital signal stream (typically a stream of video signals). The compressor 3 is connected to a multiplexer and scrambler 4 by linkage 5.

The multiplexer 4 receives a plurality of further input signals, assembles the transport stream and transmits compressed digital signals to a transmitter 6 of the broadcast centre via linkage 7, which can of course take a wide variety of forms including telecommunications links. The transmitter 6 transmits electromagnetic signals via uplink 8 towards a satellite transponder 9, where they are electronically processed and broadcast via notional downlink 10 to earth receiver 12, conventionally in the form of a dish owned or rented by the end user. Other transport channels for transmission of the data are of course possible, such as terrestrial broadcast, cable transmission, combined satellite/cable links, telephone networks etc.

The signals received by receiver 12 are transmitted to an integrated receiver/decoder 13 owned or rented by the end user and connected to the end user's television set 14. The receiver/decoder 13 decodes the compressed MPEG-2 signal into a television signal for the television set 14. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In a multichannel system, the multiplexer 4 handles audio and video information received from a number of parallel sources and interacts with the transmitter 6 to broadcast the information along a corresponding number of channels. In addition to audiovisual information, messages or applications or any other sort of digital data may be introduced in some or all of these channels interlaced with the transmitted digital audio and video information.

A conditional access system 15 is connected to the multiplexer 4 and the receiver/decoder 13, and is located partly in the broadcast centre and partly in the receiver/decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 13. Using the receiver/decoder 13 and smartcard, the end user may purchase commercial offers in either a subscription mode or a pay-per-view mode.

As mentioned above, programmes transmitted by the system are scrambled at the multiplexer 4, the conditions and encryption keys applied to a given transmission being determined by the access control system 15. Transmission of scrambled data in this way is well known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the receiver/decoder 13 having access to an equivalent to the exploitation key stored on a smart card inserted in the receiver/decoder to decrypt the encrypted control word and thereafter descramble the transmitted data. A paid-up subscriber will receive, for example, in a broadcast monthly EMM (Entitlement Management Message) the exploitation key necessary to decrypt the encrypted control word so as to permit viewing of the transmission.

An interactive system 16, also connected to the multiplexer 4 and the receiver/decoder 13 and again located partly in the broadcast centre and partly in the receiver/decoder, enables the end user to interact with various applications via a modemed back channel 17. The modemed back channel may also be used for communications used in the conditional access system 15.

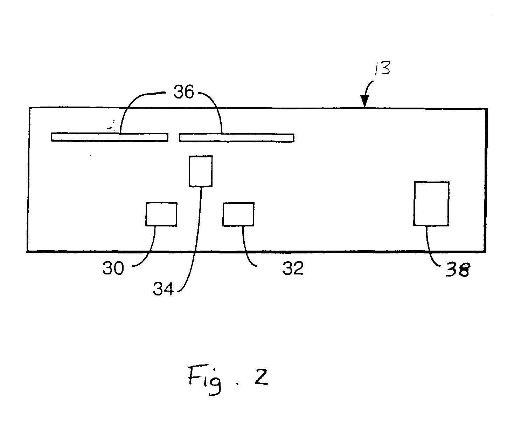

Physical interfaces of the receiver/decoder 13 are used for downloading data. With reference to Figure 2, the receiver/decoder 13 contains, for example, six downloading devices; serial interface 30, parallel interface 32, modem 34, two card readers 36, and MPEG flow tuner 38.

The broadcast and reception system is also used to provide internet services such as web browsing and e-mail. An application which is run by the receiver/decoder 13 enables the receiver/decoder to access internet services and to display web pages and e-mails either on television set 14 or via a computer connected to the receiver/decoder 13.

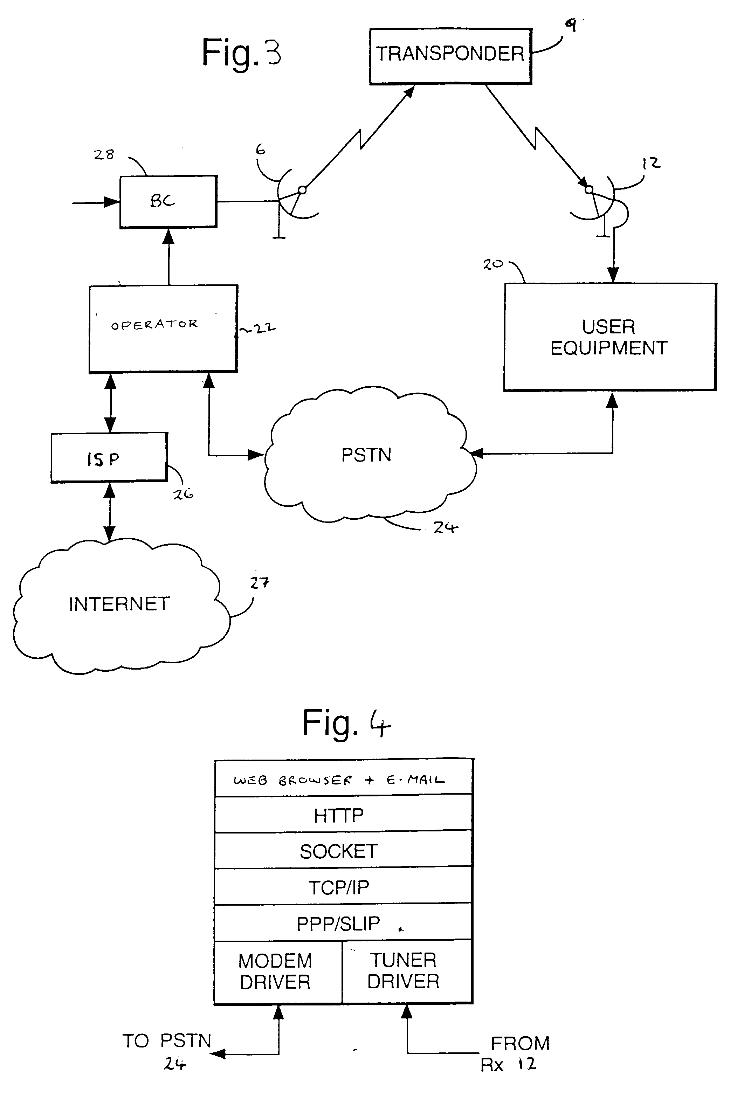

Referring to Figure 3, an overview of the internet access system will be described. User equipment 20 (which includes a receiver/decoder) communicates with operator 22 via the public switched telephone network (PSTN) 24. The user equipment sends a request to the operator 22 to be sent certain data, for example, a particular web page or e-mail. The operator receives this request and outputs the request to internet service provider (ISP) 26. In response to this request, the ISP supplies a response to the operator, which might comprise a requested web page obtained from the internet 27, or an e-mail which was waiting for the subscriber at the ISP. The operator delivers the response to the broadcast centre 28, where it is integrated into the MPEG bitstream, for example as a private section, and transmitted by the transmitter 6 and received by receiver 12 as previously described. The user equipment 20 extracts the response from the MPEG bitstream and displays it on a television set or on a computer screen. The response may alternatively be transmitted to user equipment 20 via the PSTN 24.

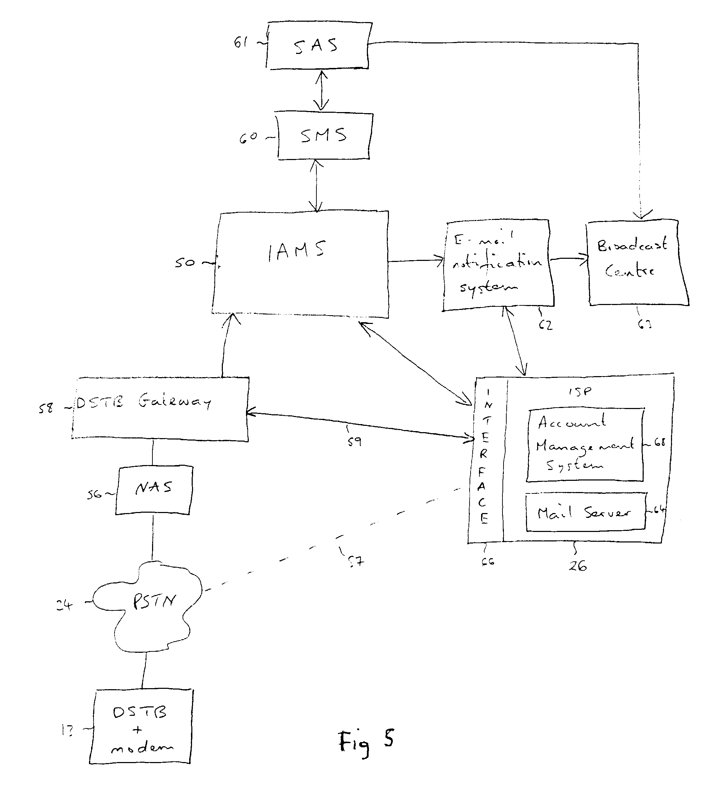

The software levels employed in the user equipment 20 are shown in Figure 4. The application level comprises a web browser and e-mail application, which may be a commercial application such as Netscape or Microsoft Internet Explorer and Outlook Express, or an application specifically designed to run on a receiver/decoder. Below the application level are HTTP, socket, TCP/IP, PPP/SLIP and a driver level. The driver level is modified, as compared with a browser application running traditionally on a PC, in that it is divided into a modem driver for communicating with the PSTN 24 via the modem of the user equipment and a tuner driver for communicating via the MPEG flow tuner 4028.

Various configurations of the user equipment 20 are possible. In one configuration a PC is not used and all of the user software runs on the receiver/decoder 13. In this configuration the receiver/decoder 13 communicates with the PSTN 24 either via an internal modem or via an external modem and the serial port. The receiver/decoder 13 can receive Internet responses in the bitstream from the earth receiver 12. The user interface is provided by a remote controller or keyboard and a television set connected to the receiver/decoder 13. In this configuration, the TCP/IP level shown in Figure 4 may be omitted, in which case a gateway located at the operator provides the necessary protocols, as will be described later.

In another configuration a personal computer (PC) is provided which is connected by its parallel port to the parallel port 32 of the receiver/decoder 13 (or optionally by its serial port to the serial port 30 of the receiver/decoder 13). In this case, an upper portion of the software levels shown in Figure 4 run on the PC, and the remaining lower portion of the software levels run on the receiver/decoder 13. The user interface is provided by a keyboard and a monitor connected to the PC.

In a further configuration a PC is connected to the PSTN 24 via an internal or external modem of the PC. In this configuration, the receiver/decoder 13 may be provided separately or in the form of an add-on or plug-in card of the PC, connected to the ISA or PCI bus thereof.

The architecture of the internet access system is shown in Figure 5. Referring to Figure 5, internet account management system (IAMS) 50 is linked to internet service provider (ISP) 26 which provides services such as web browsing and e-mail. The IAMS 50 is also linked to subscriber management system (SMS) 60 which manages subscribers and sends requests to the IAMS to grant or deny access to internet services. Receiver/decoder 13 is connected to the IAMS via an internal modem, the public switched telephone network (PSTN) 24, network access server (NAS) 56, and gateway 58.

The SMS is also connected to Subscription Authorisation System (SAS) 61, which manages authorisations and subscribers' orders for broadcast services, such as broadcast television services. The SMS runs the SAS anti IAMS systems in parallel and ensures consistency between the two systems. Communication between the SMS and the SAS and IAMS takes place using a real time TCP/IP link using batch files.

Gateway 58 allows users to access internet services in real time. Such services include mail services for sending and receiving mail and other services which may be provided by ISP 26, and provisioning services and reminder services, which are provided by the IAMS. The gateway 58 is a message router that enables communication with various different systems in a single modem connection. Where the receiver/decoder is not equipped with TCP/IP protocols for communicating with the ISP, the gateway also provides the necessary protocols for the receiver/decoder to communicate with the ISP. The receiver/decoder 13 then communicates with the ISP via gateway 58, as indicated by line 59 in Figure 5. Where the receiver/decoder is equipped with the necessary protocols, communication can take place with the ISP directly, as indicated by dashed line 57 in Figure 5.

ISP interface 66 allows each modification related to a user's account which takes place in the IAMS to be duplicated to a user account in ISP 26 in charge of hosting internet services, such as mail services. It should be noted that all information relating to users' internet accounts is centralised in the IAMS, which ensures the management of TV and internet parameters. The IAMS also ensures the relationship between internet parameters and TV parameters, through its interface with Subscriber Management System (SMS) 60 The SMS 60 manages subscribers and sends requests to the IAMS in order to grant or to deny access to internet services by subscribers.

In order to set up a user account, a user first sends a request for a new account, which includes the smartcard number together with information such as requested e-mail address and password and selected options, from the receiver/decoder 13 to the IAMS 50. The IAMS checks if the related subscriber's account has already been created on a request from the SMS, by checking the smartcard number of the receiver/decoder. If the subscriber account has been created, then the subscriber may create new user accounts. The IAMS then sends a request to the ISP to set up an internet account together with the requested e-mail address and password. Once the account has been set up, the ISP returns an acknowledgement to the IAMS. The user account information (password, e-mail address and internet parameters), is stored in the IAMS, along with the smartcard number of the subscriber. The user can then send and receive mail to and from the mail server 28.

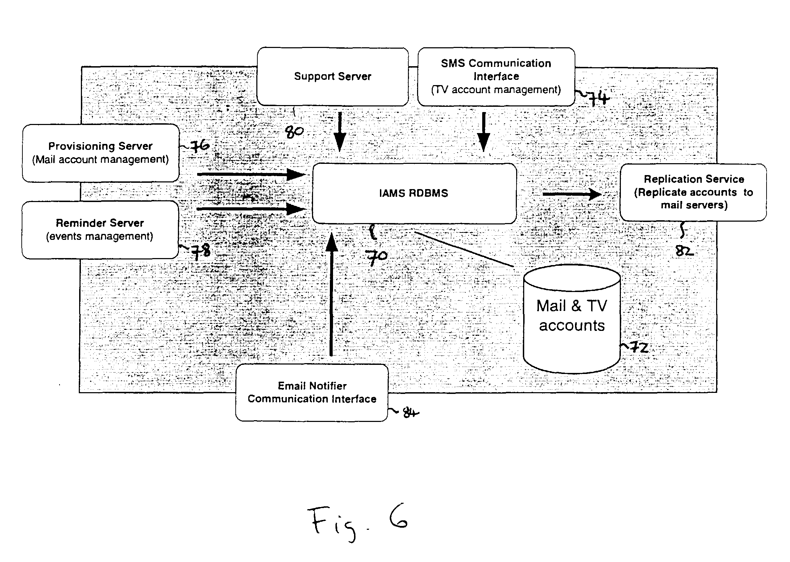

The main components of the IAMS are shown in Figure 6. The main functions of the IAMS are as follows:
o maintaining a centralised list of e-mail account parameters linked to subscriber parameters such as smartcard number
o granting or denying access to internet services for a subscriber at the request of the SMS
o customising internet accounts at the request of subscribers (provisioning)
o reminder service, which allows an e-mail user to register an event and to be warned by an e-mail at the time of the event
o duplication service, which allows updates of the IAMS contents to be copied to a related server, such as an ISP

Central to the IAMS is a relational database management system (RDBMS) 70, which contains subscription information for internet services and e-mail accounts, stored in storage means 72. SMS communication interface 74 allows the IAMS to communicate with the SMS, so that the IAMS may be updated with the details of subscribers who have been granted or denied access to mail services. Provisioning server 76 allows a user to manage and customise his e-mail account. Reminder server 78 allows a user to manage a list of events. An event is related to a user's e-mail account. A user may register an event and receive an automatic reminder a predetermined number of days before the event via an automatically generated e-mail. E-mail notification interface 84 allows the EMNS 62 to search for a user's notification preferences in the IAMS RDBMS 70 in order to send an over air notification message. Support server 80 allows an administrator to check the presence and the status of a subscriber or an e-mail user in the IAMS. Replication service 82 copies updates of the contents of the IAMS RDBMS 70 to the ISP account management system.

Requests which are sent to the IAMS from receiver/decoder 13 are directed to the appropriate part of the IAMS, such as the provisioning server (for e-mail account management) and the reminder server (to manage reminder events), by the gateway 58.

Further details of the IAMS are described in co-pending patent application entitled "Internet Subscriber Management" in the name of the present applicant, the subject matter of which is incorporated herein by reference. Further details of the gateway, and the method of communication between the receiver/decoder and the IAMS and the ISP, are described in co-pending application entitled "Communication Methods and Apparatus" in the name of the present applicant, the subject matter of which is incorporated herein by reference.

### E-mail notification

As shown in Figures 5 and 6, the IAMS is provided with an e-mail notification interface 84, which interfaces with e-mail notification system (block 62 in Figure 5). The e-mail notification system allows users to be notified as soon as they receive new e-mail in their mailboxes in mail server 64. A short message is sent to their receiver/decoder over-air.

Mail server 64 stores e-mails which have been received from the internet and which are destined for the user. When new mail is received the mail server sends a notification demand to e-mail notification system (EMNS) 62. The notification demand is only sent on receipt of new mail by the ISP 26, that is, it is event driven. The various messages that may be sent from the ISP to the EMNS are as follows:
o new e-mail - new e-mail is waiting
o first e-mail - first e-mail since user last connected
o user connected to mail server

Once the EMNS has received a notification request from the ISP, it searches in the IAMS RDBMS 70 for the user's notification preferences and related parameters needed to compose a notification message. Various preferences which may be selected by the user include the following:
o e-mail notification on or off
o notify each new mail or first mail since last connection to the ISP
o display the sender of the e-mail
o display the recipient of the e-mail

In some cases, it may be the operator who sets some or all of the above preferences.

The EMNS also checks that the user has not been denied use of the notification system, for example by the SMS. If the above checks reveal that the user should be informed of his e-mail, then a notification message is then generated for relay to the user. The notification message contains the smartcard number of the receiver/decoder of the user concerned, which is extracted from the IAMS RDBMS 70. The smartcard number uniquely identifies the receiver/decoder (although it is not necessarily unique to a user, since a receiver/decoder may serve a plurality of users). The notification message may also contain other information such as information identifying the recipient of the e-mail, information identifying the sender of the e-mail, and text for display by the receiver/decoder, such as the title or subject of the e-mail.

A request to broadcast the notification message is sent from the EMNS to broadcast centre 63. On receipt of the request, the broadcast centre transmits the notification message at regular intervals for a predetermined amount of time, for example, every 15 minutes for 24 hours. The cycle time may be varied; for example the notification message may be sent relatively frequently for a first period of time and relatively infrequently for a second period of time. The notification message may be sent, for example, as an entitlement management message (EMM) or as an MPEG-2 section.

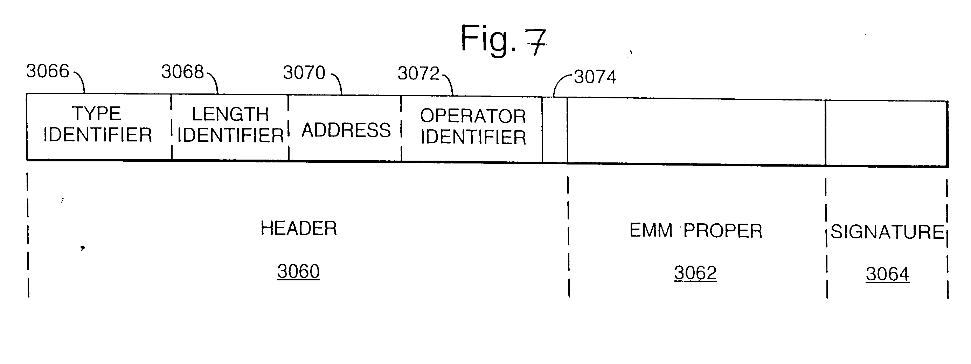

Referring to Figure 7, the structure of an EMM suitable for sending an e-mail notification message is now described. The EMM, which is implemented as a series of digital data bits, comprises a header 3060, the EMM proper 3062, and a signature 3064.

The header 3060 comprises a type identifier 3066, which in this case identifies the EMM as an individual type (that is, destined for a single subscriber), a length identifier 3068, which gives the length of the EMM, an address 3070, which is based on the smartcard number of the subscriber, an operator identifier 3072 and a key identifier 3074.

The EMM proper 3062 comprises information identifying the EMM as a mail notification EMM together with other information relating to the mail notification. For example, the EMM may contain information concerning the recipient of the e-mail in the household (where there are several e-mail users each using the same receiver/decoder), the sender of the e-mail, the title or subject of the e-mail, the number of waiting e-mails, and so on. Also in this part of the EMM is an index which identifies that particular EMM.

Finally, the signature 3064, which is typically of 8 bytes long, provides a number of checks against corruption of the remaining data in the EMM.

As mentioned above, instead of using an EMM to transmit the notification message, an MPEG section could also be used, in which any or all of the above information could be included. The advantage of using an MPEG section is that TV access control is not disturbed.

Each receiver/decoder monitors incoming notification messages and extracts those containing the smartcard number of that receiver/decoder. If more than one user is connected to the receiver/decoder, it identifies the particular user to whom the e-mail is addressed, based on information in the notification message. The receiver/decoder then informs the user that e-mail is waiting for him, for example by displaying a message on the receiver/decoder display, or on the television screen. Other information contained in the notification message may also be displayed.

Finally, when the receiver/decoder has received a mail notification message, it "burns" the message, so that the message is not repeatedly displayed. This is done by comparing incoming mail notification messages to ones that have already been received, and only notifying new messages. Typically, the EMM or MPEG section contains an index identifying that EMM or MPEG section, in which case only the indexes need be compared in order to identify whether that message has already been received and acted upon. Additionally or alternatively, the receiver/decoder 13 could request the EMNS 62 to stop sending the notification message, for example by sending a request via the PSTN 24.

Once the user has been notified of waiting mail, he can send a request to the ISP to send the e-mail. The e-mail may be sent either via the PSTN 24, or via communications link 8,9,10, in the way described above with reference to Figure 3.

In an alternative embodiment, on receipt of an e-mail notification message, the receiver/decoder 13 automatically downloads the e-mail and stores it locally for access later by the subscriber.

When the user retrieves his e-mail, the EMNS receives a message from the ISP that the e-mail has been retrieved. On receipt of this message, the EMNS stops sending the notification.

In a further embodiment, the whole of the e-mail is pushed to the user in the same way as described above with reference to notification messages. This embodiment may be preferred in communication systems with large bandwidths, such as cable and optical fibre transmission systems. In this embodiment, the need for a separate notification message may be dispensed with, since the e-mail itself is broadcast.

It will be appreciated that the e-mail notification system described above notifies a user of the arrival of e-mail at a mail centre without the user having to enquire whether e-mail is waiting, that is, the mail notification message is "pushed" to the user.

### Terms

The following terms are used herein:
- E-mail Address: An E-mail address is composed of two fields: the E-mail ID and the domain name. The form of an e-mail Address is e-mail_Id@Domain_Name.
- E-mail Account: An E-mail Account provides information about the user that a Mail Server needs to process that user's messages.
- E-mail Id: The prefix of an e-mail address. An e-mail Id is unique in a domain name.
- E-mail Notifier: The e-mail Notifier System allows subscribers (EMN) to be notified as soon as they receive a new e-mail in their mailboxes. A short message is sent to their STB over-air, and/or by other means.
- Internet Account Management System: A system managing subscriber TV account Management parameters and related E-mail Accounts System (IAMS) parameters
- Mailbox: Messages stored for IMAP delivery are held in a mailbox (IMAP or POP). A mailbox on a mail server must be uniquely identified by a mailbox Id. A mail server hosting different domain name can not consider that the e-mail Id is unique on the Mail server, so the mailbox Id must be the Email address.
- Mail Server: Program that exchanges e-mail with other Mail Servers and accepts and delivers messages to mail clients.
- Provisioning Server: Allows users to create and customise e-mail accounts themselves.
- Reminder Server: Allows a user to register an event and receive an automatic reminder via an automatic mail.
- Set Top Box: The completely assembled, ready to use (STB) digital decoding hardware, manufactured in accordance with Digital Video Broadcasting standards, CANAL + TECHNOLOGIES specifications. It is used as a digital decoder for transmitted video, audio, application and data streams so that the end user can access television programs and services.
- SmartCard: Cards that electronically store the secret keys of one or more commercial operators and other access information.
- Subscriber: A subscriber is related to a TV account (i.e. a SmartCard number).
- Subscriber Management System (SMS): A system managing data relating to subscribers.
- User: A user is related to an e-mail account. There may be multiple users for a single subscriber.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method of notifying a user of the receipt of an e-mail by a mail centre, comprising transmitting a notification message in a broadcast signal.

2. A method according to claim 1 wherein the notification message includes an identifier of a receiver/decoder to which the notification message is to be sent.

3. A method according to claim 2 wherein the receiver/decoder compares the identifier with an identifier which is stored at the receiver/decoder.

4. A method of notifying a user of the receipt of e-mail by a mail centre, which e-mail is to be transmitted to the user via a first medium, comprising transmitting a notification message, indicating the receipt of e-mail by the mail centre, to the user via a second medium, different from the first medium.

5. A method of transferring an e-mail from a mail centre to a user, comprising transmitting at least part of the e-mail in a broadcast signal.

6. A method of communicating with a mail centre, comprising running an e-mail application on a receiver/decoder.

7. Apparatus for notifying a user of the receipt of e-mail by a mail centre, comprising means for transmitting a notification message in a broadcast signal.

8. Apparatus according to claim 7 wherein the notification message includes an identifier of a receiver/decoder to which the notification message is to be sent.

9. Apparatus according to claims 7 or 8 further comprising means for storing information relating to e-mail accounts.

10. Apparatus according to claim 9 wherein information relating to e-mail accounts is linked to identifiers of receiver/decoders, and preferably wherein the information relating to e-mail accounts is linked to the smartcard numbers of receiver/decoders.

11. Apparatus according to claim 9 or 10 wherein the broadcast signal is part of a subscription service and information relating to e-mail accounts is linked to information relating to the subscription service.

12. Apparatus according to any of claims 7 to 11 wherein the notification message comprises an identifier of the recipient of the e-mail.

13. Apparatus according to any of claims 7 to 12 wherein the notification message comprises an identifier of the sender of the e-mail.

14. Apparatus according to any of claims 7 to 13 wherein the notification message comprises at least part of the text of the e-mail.

15. Apparatus according to any of claims 7 to 14 further comprising means for storing preferences selected by the user.

16. Apparatus according to any of claims 7 to 15 wherein the apparatus is adapted to notify the user of a selected number of e-mails.

17. Apparatus according to any of claims 7 to 16 wherein the broadcast signal is a digital data stream.

18. Apparatus according to claim 17 wherein the apparatus is adapted to send the notification message as a section of the digital data stream.

19. Apparatus according to claim 17 wherein the apparatus is adapted to send the notification message by way of an entitlement management message.

20. Apparatus for notifying a user of the receipt of e-mail by a mail centre, which e-mail is to be transmitted to the user via a first medium, comprising means for transmitting a notification message, indicating the receipt of e-mail by the mail centre, to the user via a second medium, different from the first medium.

21. Apparatus according to claim 20 wherein the first medium is a switched medium and the second medium is a broadcast medium.

22. Apparatus for transferring an e-mail from a mail centre to a user, comprising means for transmitting at least part of the e-mail in a broadcast signal.

23. A receiver/decoder for receiving and/or decoding a broadcast signal, comprising means for receiving, together with a broadcast signal, a notification message for notifying a user of the receipt of e-mail by a mail centre.

24. A receiver/decoder according to claim 23 wherein the receiver/decoder is adapted to compare an identifier in the notification message with an identifier which is stored at the receiver/decoder.

25. A receiver/decoder according to claim 23 or 24 wherein the receiver/decoder has a smartcard number and the identifier comprises at least part of the smartcard number.

26. A receiver/decoder according to any of claims 23 to 25 wherein the receiver/decoder generates a signal indicating the receipt of e-mail by the mail centre.

27. A receiver/decoder according to any of claims 23 to 26 wherein the receiver/decoder generates a signal for displaying at least part of the notification message.

28. A receiver/decoder for receiving and/or decoding a broadcast signal, comprising means for receiving e-mail via a first medium and means for receiving a notification message, indicating the receipt of e-mail by the mail centre, via a second medium different from the first medium.

29. A receiver/decoder according to claim 28 wherein the first medium is a switched medium and the second medium is a broadcast medium.

30. System for notifying a user of the receipt of e-mail comprising apparatus according to any of claims 7 to 22 and a receiver/decoder according to any of claims 23 to 29.
